# EUROPEAN PATENT APPLICATION

(11) **EP 4 795 931 A1**
(43) Date of publication of application: **26.08.2026**
(21) Application number: 25382147.4
(22) Date of filing: 19.02.2025
(51) Int. Cl.: A01K 29/00, A01K 45/00

(54) **REFRIGERATION CHAMBER AND CONTAINER ASSEMBLY FOR A DEAD LIVESTOCK COLLECTION SYSTEM**

(71) Applicant: Second Life Collect Systems, SL, 25003 Lleida (ES)
(72) Inventor: ROCA ENRICH, Ramon, 25310 Agramunt (ES); CODINA RELATS, David, 08010 Barcelona (ES)
(74) Representative: Torner, Juncosa I Associats, SL

(57) **Abstract**

A refrigeration chamber and container assembly for a dead livestock collection system comprises a container (1) for dead livestock loaded by a farmer and a refrigeration chamber (4) to enclose the container (1). The refrigeration chamber (4) comprises a hinged door (11) movable between an open and a closed position by a door actuation unit (3), a refrigeration unit (22), and a container translation unit to move a container (1) while the door (11) is open. The container translation unit includes guide elements for guiding the movement of the container (1), comprising a first section (5) on an inner side (11a) of the door (11) and a second section (6) arranged on a lower basal surface (4a) of the refrigeration chamber (4), the first and second sections (5), (6) aligned providing a continuous path. The inner side (11a) of the door (11) in an open position provides a loading site.

## Description

### Technical field

The present invention generally relates to a refrigeration chamber for the collection of dead farm animals, and more particularly a refrigeration chamber for the collection and temporary storage of dead animals from livestock farms.

The refrigeration chamber has application in the field of animal husbandry on farms, such as pig, sheep, goat, poultry, and rabbit farming, among others.

### Background of the Invention

For the collection of dead livestock, i.e. farm animals, it is common to have a container with a lid located at a collection site close to a delimiting perimeter of the farm and into which the farmer deposits the dead livestock, and a collection vehicle with a collection box with a top loading opening and a loading mechanism configured to grasp the container at the collection site, lift and tip the container to unload the dead livestock into the collection box through the top loading opening, and return the container to the collection site. It is also known to have cooling means configured to maintain the container at or below 8 degrees Celsius.

According to this conventional system, the farmer notifies a collection control station in charge of scheduling the collection routes of the collection vehicle when he considers that the container is full or that a maximum recommended time has elapsed since the first dead animal was deposited. However, due to errors of judgement of the farmer, there is a risk that the collection takes place too late, when the dead animals have started to decay inside the container and gases, including bad smells, and/or liquids resulting from the decomposition of the dead animals have started to be released into the environment, which can lead to a health hazard.

CN112460890 A1 discloses a collection container for a device for storing animal carcasses in a refrigerated building. The container has no lid and once loaded, is moved to a shelf in the refrigerated building by means of suitable equipment such as a stacker. For unloading, the container is removed from the refrigerated building and moved to an unloading location where the carcass of the dead animal is discharged from the container through a hinged wall by means of a pusher installed inside the container.

CN111003432 A1 belongs to the technical field of environmental protection equipment and relates to a collection point material box access system. The farmers send sick and dead livestock and poultry to a feed box that after a storage time is over the feed box enters a cold storage to be frozen and transported through a bottom conveyor system.

CN213111583 U discloses a collection and transfer system for the transport of dead farm animals comprising a collection truck, a refrigeration chamber, a container, and a transfer truck. The upper part of the refrigeration chamber has a discharge opening with a lid. The top of the container is provided with a feed port with a horizontal sliding lid, and the container is positioned inside the refrigeration chamber so that the feed port corresponds to the position of the discharge opening.

The document "GUIA DE RETIRADA DE ANIMALES MUERTOS EN EXPLOTAClÓN" issued by the Spanish Ministry of Agriculture, Food and Environment in October 2014 and published at <https://www.mapa.gob.es/es/ganaderia/temas/sanidad-animal-higiene-ganadera/guiarecogidacadaveresvr3oct_tcm30-560982.pdf> discloses, in the last paragraph of page 9, a variant that perfects the collection system established in section 4(b) of the same document regarding containers, and which should be promoted on farms that opt for a more spaced collection over time. This variant consists of placing the container, closed by means of a watertight lid, inside a pit or underground watertight space refrigerated by means of a cooling device capable of maintaining a temperature of 8 degrees Celsius inside the container, which considerably improves the visual and environmental impact (e.g. odours or other gases and/or liquids).

EP4378307 A1 discloses a dead livestock collection system comprising a container located at a collection or loading site close to a delimiting perimeter of a farm, configured for receiving dead livestock loaded by a farmer and a refrigeration chamber dimensioned to temporarily enclose a loaded container, the refrigeration chamber being provided with a door next to the collection site, the door being equipped with a door actuation unit to be opened and closed. A refrigeration unit is arranged to maintain the refrigeration chamber at or below a predetermined temperature while its door is closed. The system further comprises a container translation unit configured to move a dead livestock container from a collection site to the refrigeration chamber and from the refrigeration chamber to the collection site while the door is open.

The present invention represents a significant development of this last invention and relates to a refrigeration chamber and container assembly for a dead livestock collection system, in which the reception conditions of the container at a loading site, next to the refrigeration chamber, as well as the means of translation both for insertion and removal of the dead livestock container in relation to the refrigeration chamber have been improved.

The proposed improvements ease the access and removal through a guided displacement of the dead livestock container with regard to the refrigeration chamber and facilitate the positioning of the dead livestock container at a loading site, avoiding the need for civil works on a specific even terrain, due to the inevitable irregularities of this terrain, because the refrigeration chamber itself provides a specific area for receiving and stabilizing the dead livestock container.

Furthermore, the invention provides a refrigeration chamber including means for being transported, for example by a forklift or crane truck, to an operating location.

### Description of the Invention

The present invention, in relation to the described state of the art, represents a technical development for the implementation of collection systems, which improves the sanitary safety of the whole collection and transport operation and offers different variants for diverse farm scenarios.

The present invention discloses a refrigeration chamber and container assembly for a dead livestock collection system, according to the disclosure of EP4378307 A1 in which a container is configured to receive dead livestock loaded by a farmer and the refrigeration chamber being dimensioned to enclose the container and comprising:
- a door movable between an open and a closed position by a door actuation unit that can be arranged on the sides of the refrigeration chamber;
- a refrigeration unit configured to maintain the refrigeration chamber at or below a predetermined temperature while the door is closed; and
- a container translation unit configured to move the container from a loading site to the refrigeration chamber and from the refrigeration chamber to the loading site, while the door is open, the container translation unit comprising guide elements for guiding the movement of the container between the loading site and the refrigeration chamber,

According to this invention:
the door of the refrigeration chamber is an articulated door hinged at a lower edge of an entrance to the refrigeration chamber;
the guide elements comprise a first section arranged on an inner side of the door and a second section arranged on a base of the refrigeration chamber, the first section and the second section being in alignment when the door is open, providing a continuous path, and
the inner side of the door in an open position provides a horizontal surface or platform defining the loading site for the livestock container.

Each of the first and second sections of the referred guide elements comprises two parallel and spaced apart guiding members.

According to the present invention, the refrigeration chamber may be placed next to the delimiting perimeter of the farm.

The refrigeration unit of the refrigeration chamber may be prepared to maintain the refrigeration chamber at a temperature of 10 degrees Celsius or below, preferably 8 degrees Celsius or below, and even more preferably 5 degrees Celsius or below. However, the aforementioned temperatures are only exemplary values, and the refrigeration unit can be configured to maintain a different temperature, said temperature being higher or lower than the previously mentioned examples.

In the present document livestock designates swine, sheep, goats, poultry, rabbit, etc.

According to the present invention, the inner side of the door further includes centring elements, at each side of the first section of the guide elements, for centring a dead livestock container with wheels or a dead livestock container carrying platform with wheels about the first section of the guiding elements when the referred container being placed at the loading site (inner side of the open door). In an embodiment each centring element comprises at least one linear profile with a surface inclined towards the corresponding guiding members of the first section of the guide elements and adjacent thereof.

The referred centring elements comprise in one embodiment one surface inclined towards the corresponding first section of the guide elements, which cooperates in the maintenance of the wheels (container or platform) on the said first section of the guide elements.

In an embodiment of this invention the container translation unit comprises a hydraulic cylinder having at a first piston rod end thereof a connecting element for interfering with a wheeled container, when placed at the loading site over the inner side of the open door, so that the hydraulic cylinder is able to move the container from the loading site to the refrigeration chamber, and vice versa.

The referred connecting element attached to a first piston rod end of the hydraulic cylinder ais configured to interfere (for example, by insertion) with a housing on the underside of a base of the container.

The connecting element according to a preferred embodiment is a rectangular prism having two inclined surfaces on an upper face thereof extending from it, configured for insertion into a cavity located as indicated above on the underside of the base of the container.

In addition, the door further comprises on an inner side thereof guides for guiding the movement of the connecting element.

In an alternative embodiment when using a container carrying platform with wheels, the container translation unit comprises at least one hydraulic cylinder having a first piston rod end thereof connected to the platform movable along the guide elements and supporting the container, so that the hydraulic cylinder is able to move the container carrying platform from the loading site to the refrigeration chamber, and vice versa.

The cited hydraulic cylinder in a preferred embodiment may be a double piston rod cylinder in which an end of a second rod of the hydraulic cylinder is fixed to an inner basal surface of the refrigeration chamber.

The door of the refrigeration chamber is preferably arranged at a front side of the refrigeration chamber.

As per a preferred embodiment the refrigeration chamber further comprises at a base thereof coupling elements (for example two coupling elements arranged transversally) configured for receiving corresponding forks of a forklift truck or crane truck which enable the refrigeration chamber to be transported and positioned on a suitable ground surface.

The refrigeration chamber according to the above features constitutes an autonomous unit in that it provides means for receiving a properly positioned dead livestock container on its open door and for the displacement of the dead livestock container (into or out of the chamber) and storage of the dead livestock in suitable thermal conditions.

The refrigeration chamber of this invention further comprise a signal receiver operatively connected to a control unit of the refrigeration chamber, configured to control, at least, the door actuation unit and the container translation unit. In a preferred embodiment this signal receiver is an infrared signal receiver. This arrangement of control means ensures that any remote operation of the refrigeration chamber door or container translation unit requires the attention of an operator who must direct an infrared actuator towards the signal receiver, paying adequate attention to any manoeuvre. In contrast, radiofrequency signal receivers, or other omnidirectional signal receivers, can be activated even the operator is not in front of the door and aware of the manoeuvre.

The top face of the refrigeration chamber may further include solar panels suitable for providing power to the refrigeration unit while minimising its electrical power consumption.

In a preferred embodiment the interior walls of the dead livestock container may include a coating of a non-porous nanoparticle coating that provides a non-stick surface that facilitates the loading and unloading of the dead livestock and the cleaning of the container after it has been emptied.

According to an embodiment of the invention, the interior walls of the refrigeration chamber may include an antibacterial and antimicrobial paint coating to improve the hygienic storage conditions of the loaded livestock container.

The refrigeration chamber and container assembly above described can include in the case of small or medium sized farms, that do not have specific equipment to load dead livestock into the container, a loader, as an auxiliary equipment, for loading dead livestock into the container, the loader being arranged adjacent to the loading site defined by the open door of the refrigeration chamber, and contiguous to the container. In an embodiment the loader comprises a receptacle movable between a loading position and an unloading position, and vice versa, by at least one hydraulic cylinder.

According to a preferred embodiment the cited receptacle is rotatably movable around a rotation axis arranged that in operation is placed adjacent to the dead livestock container and above an upper edge thereof.

In a preferred embodiment of the invention both the actuation unit that open and closes the door of the refrigeration chamber, the cylinder intended to displace the wheeled container or the container carrying platform, as well as the cylinder to operate the auxiliary loader are hydraulically powered, e.g. from an oil-hydraulic unit, but can also be in an alternative embodiment electrically powered , i.e. implemented by an electrical linear actuator.

According to the present invention, the refrigeration chamber may be equipped with a plurality of sensors and the dead livestock system in which the refrigeration chamber is integrated may further comprise a computing device configured to determine, in cooperation with the plurality of sensors, when the content of the container needs to be collected.

The refrigeration chamber may further comprise a signal emitter connected to the cited computing device and configured to automatically send a collection message to a collection control station in charge of programming collection routes of a collection vehicle when the computing device has determined a collection need. Preferably, the signal emitter is a radio signal emitter, and the computer device is configured to automatically send a radio collection message to a collection station configured to receive such kind of message.

It will be understood that references to geometric position, such as parallel, perpendicular, tangent, etc. allow deviations up to ± 5° from the theoretical position defined by this nomenclature.

It will also be understood that any range of values given may not be optimal in extreme values and may require adaptations of the invention to these extreme values are applicable, such adaptations being within reach of a skilled person.

### Brief description of the Figures

The foregoing and other advantages and features will be more fully understood from the following detailed description of an embodiment with reference to the accompanying drawings, to be taken in an illustrative and non-limitative manner, in which:
Fig. 1 is a perspective of the refrigeration chamber with its frontal door closed, the refrigeration chamber including inside a dead livestock container filled, in order to maintain its contents in suitable temperature conditions as explained above.
Fig. 2 shows a perspective of the refrigeration chamber with its frontal door open providing a loading site for a wheeled dead livestock container arranged on a first section of the guide elements defined in the inner side of the door.
Fig. 3 is an elevation view in section through a median plane showing the refrigeration chamber with its frontal door open on which it is arranged a wheeled dead livestock container.
Fig. 4 is a plan view sectioned by a horizontal plane passing over the dead livestock container.
Fig. 5 is a top view of the refrigeration chamber with the frontal door open showing the elements associated with the inner side of the door that provides a surface intended for the reception, positioning and guidance of a dead livestock container which has been omitted from this drawing.
Fig. 6 is a partial perspective view showing the entrance area of the refrigeration chamber showing the door actuation means, the first section and second section (partial view) of the guide elements, the centring elements associated to the guiding elements, the connecting element attached to a first end rod of a hydraulic cylinder, the connecting element being intended for interference with a wheeled container or wheeled platform (here omitted) and the guides for guiding the movement of the connecting element.
Fig. 7 is a perspective view showing an embodiment of a loader for loading dead livestock into the container placed adjacent to the container arranged at a loading site on the inner side of the open door of the refrigeration chamber, the loader being movable between a loading position and an unloading position, and vice versa, by one hydraulic cylinder.
Fig. 8 is a perspective view showing the loader referred on the previous Fig. 7 in operation with a receptacle raised and rotated around a rotation axis arranged in operation adjacent to the container cargo top opening and above an upper edge thereof.

### Detailed Description of the Invention and of particular embodiments

The foregoing and other advantages and features will be more fully understood from the following detailed description of an embodiment with reference to the accompanying drawings, to be taken in an illustrative and not limitative way.

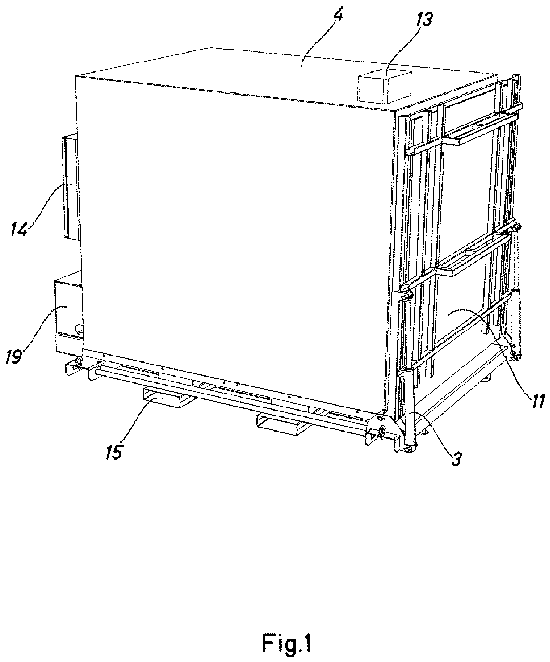

Figure 1 illustrates an embodiment of a refrigeration chamber 4 according to this invention with a door 11 arranged at a front side of the refrigeration chamber 4 and hinged at a lower edge of an entrance to the refrigeration chamber 4, and the door 11 being in a closed state. This figure 1 shows the means (hydraulic cylinder 3) of operating the door 11 in opening and closing, an oleo-hydraulic unit 19 and a cabinet housing a control unit 14 of the refrigeration chamber and additional electrical components.

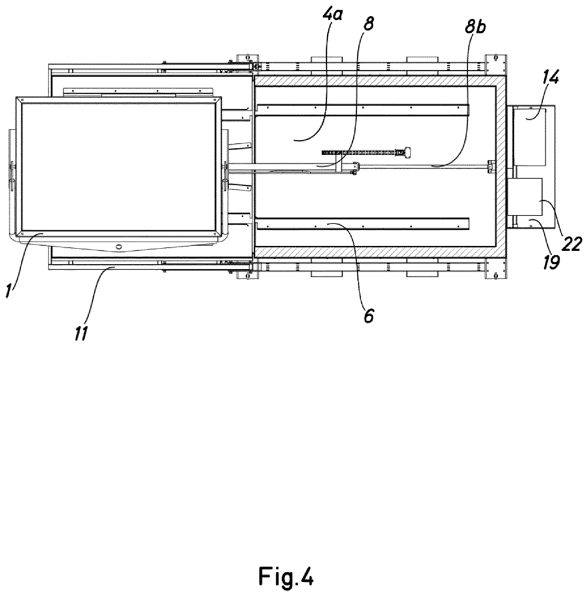

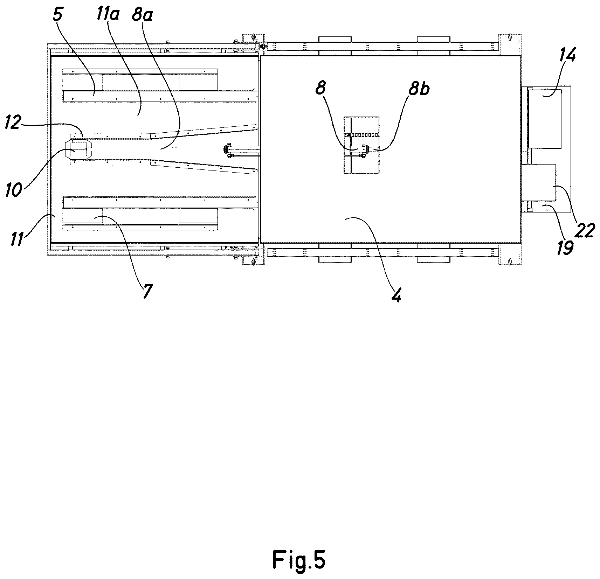

The refrigeration chamber is equipped with a refrigeration unit 22 (see Figs. 4 and 5) configured to maintain the refrigeration chamber at or below a predetermined temperature while the door 11 is closed.

Figure 1 also shows a signal receiver 13 operatively connected to a control unit 14 of the refrigeration chamber 4, configured to control, at least, the door actuation unit 3 and the container translation unit.

In a preferred embodiment the signal receiver (13) is an infrared signal receiver.

As previously indicated the proposed arrangement of control means ensures that a remote operation of the refrigeration chamber door or container translation unit requires the attention of an operator who must direct an infrared actuator towards the signal receiver, paying adequate attention to any manoeuvre.

Figures 1 to 3 also show that the refrigeration chamber 4 further comprises attached at an underside of a base thereof two coupling elements 15 for receiving corresponding fingers of a forklift truck or crane truck, the two coupling elements 15 being arranged transversally to the refrigeration chamber 4. Therefore, the refrigeration chamber can be easily transported and placed in a suitable place on a terrain flat enough.

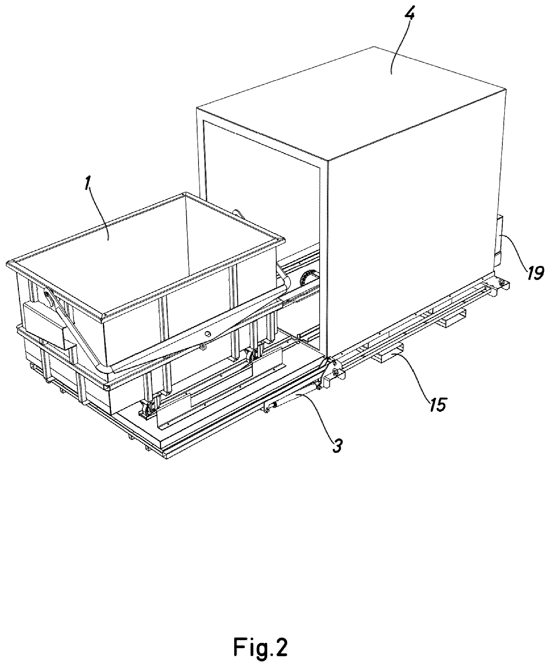

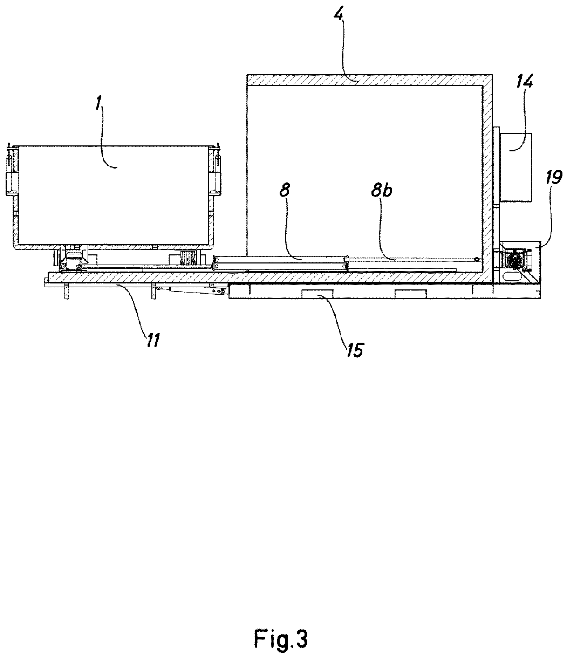

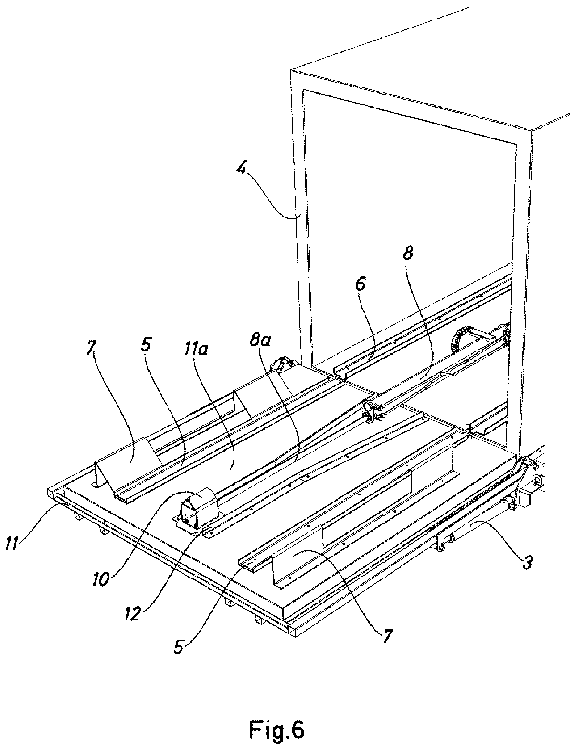

Figures 3 to 6 and more particularly figures 5 and 6 show the features and components of a container translation unit according to this invention configured to move a dead livestock container 1 (see Fig. 2) from a loading site to the refrigeration chamber 4 and from the refrigeration chamber 4 to the loading site while the door 11 is open, the container translation unit comprising guide elements for guiding the movement of the dead livestock container 1 between the loading site and the refrigeration chamber 4.

The guide elements comprise (see Figs. 5 and 6) a first section 5 arranged on an inner side 11a of the door 11 and a second section 6 arranged on a lower basal surface 4a of the refrigeration chamber 4, the first section 5 and the second section 6 of the guide elements being aligned providing a continuous path for moving the dead livestock container 1.

Fig. 2 to 4 show that the door 11 in an open position defines a loading site for the dead livestock container 1. In fact, the door 11 in said open position provides a loading platform that is laid out on the ground and on the inner surface 11a of the door the container 1 is placed (see Figs. 3 and 4).

In an embodiment the dead livestock container 1 is a wheeled container, and the container translation unit comprises one centring element 7, at each side of the first section 5 of the guide elements, for centring the container wheels with regard to this first section 5 of the guiding elements when the dead livestock container 1 is positioned at the loading site.

Figure 6 shows in detail that each centring element 7 comprises at least one surface inclined towards the corresponding first section 5 of the guide elements.

From figures 5 and 6 it can be seen that in an embodiment the container translation unit comprises one hydraulic cylinder 8, for example a double piston rod cylinder having at an end of a first piston rod 8a thereof a connecting element 10 for interfering with a housing on the underside of a base of the dead livestock container 1, when placed at the loading site, so that the hydraulic cylinder 8 is able to move the dead livestock container 1 from the loading site on the inner side 11a of the open door, to the refrigeration chamber 4, and vice versa; an end of a second piston rod 8b of the hydraulic cylinder 8 is fixed to an inner basal surface 4a of the refrigeration chamber 4.

The connecting element 10 may be a rectangular prism having two inclined surfaces on an upper face thereof extending from it as visible in figure 6.

Figures 5 and 6 also show additional guides 12 for guiding the movement of the connecting element 10 at least in a first stroke.

In an alternative embodiment (not shown in the figures) the container 1 is placed in a carrying platform with wheels, as disclosed in Figs. 2 and 3 of the cited EP4378307 A1, the container translation unit comprising in this case one hydraulic cylinder having an end of a first piston rod (8a) thereof connected to the platform movable along the guide elements and supporting the dead livestock container 1 so that the hydraulic cylinder 8 is able to move the container carrying platform from the loading site to the refrigeration chamber and vice versa; an end of a second piston rod (8b) of the hydraulic cylinder is fixed to an inner basal surface (4a) of the refrigeration chamber (4).

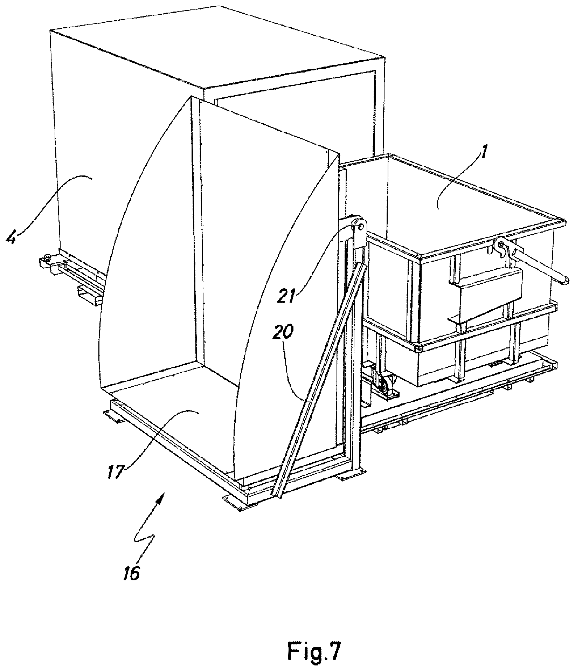

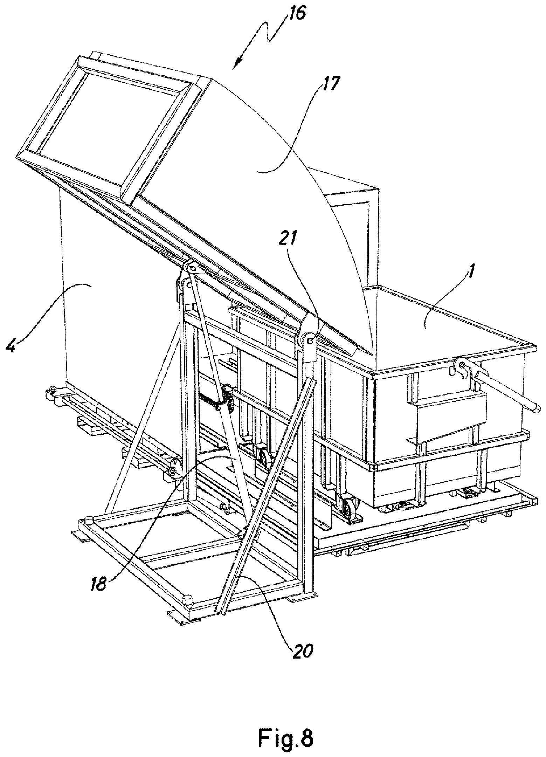

As previously indicated the refrigeration chamber and container assembly above described can include in the case of small or medium sized farms, that do not have specific equipment to load dead livestock into the container, as auxiliary equipment, a loader 16 installed on a support structure 20 (see Figs. 7 and 8) for assist in loading dead livestock into the container (1).

As shown in the figures 7 and 8, in operation the loader 16 will be arranged adjacent to the loading site and contiguous to the container 1 In the shown embodiment the loader 16 comprises a receptacle 17 movable between a loading position and an unloading position, and vice versa, by a hydraulic cylinder 18. The receptacle 17 is rotatably movable around a rotation axis 21 arranged in operation adjacent to the container 1 and above an upper edge thereof. In a preferred embodiment the interior walls of the receptacle 17 are lined with a non-porous nanoparticle coating that provides a non-stick surface that facilitates the handling of the dead livestock and the cleaning of the receptacle 17 after it has been used. In a loading operation.

## Claims

1. Refrigeration chamber and container assembly for a dead livestock collection system;
the container (1) being configured to receive dead livestock loaded by a farmer;
the refrigeration chamber (4) being dimensioned to enclose the dead livestock container (1) and comprising:
- a door (11) movable between an open and a closed position by a door actuation unit (3);
- a refrigeration unit (22) configured to maintain the refrigeration chamber at or below a predetermined temperature while the door (11) is closed;
- a container translation unit configured to move a dead livestock container (1) from the refrigeration chamber (4) to a loading site and from the loading site to the refrigeration chamber (4) while the door (11) is open, the container translation unit comprising guide elements for guiding the movement of the dead livestock container (1) between the loading site and the refrigeration chamber (4);
**characterised in that**:
the door (11) is an articulated door hinged at a lower edge of an entrance to the refrigeration chamber (4);
the guide elements comprise a first section (5) arranged on an inner side of the door (11) and a second section (6) arranged on a lower basal surface (4a) of the refrigeration chamber (4), the first section (5) and the second section (6) of the guide elements being aligned providing a continuous path;
and **in that** an inner side (11a) of the door (11) in an open position provides the loading site.

2. Refrigeration chamber and container assembly, according to claim 1, wherein the dead livestock container (1) is a wheeled container, and the container translation unit comprises at least one centring element (7), at each side of the first section (5) of the guide elements, for centring the container wheels with regard to the first section (5) of the guiding elements when dead livestock container (1) being placed at the loading site.

3. Refrigeration chamber and container assembly, according to claim 2, wherein each centring element (7) comprises at least one surface inclined towards the corresponding first section (5) of the guide elements.

4. Refrigeration chamber and container assembly, according to any one of the claims 2 or 3, the container translation unit comprises at least one hydraulic cylinder (8) or linear actuator having at an end of a first piston rod (8a) thereof a connecting element (10) for interfering with the dead livestock container (1), when placed at the loading site, so that the hydraulic cylinder (8) is able to move the dead livestock container (1) from the loading site to the refrigeration chamber (4), and vice versa; an end of a second piston rod (8b) of the hydraulic cylinder (8) is fixed to an inner basal surface (4a) of the refrigeration chamber (4).

5. Refrigeration chamber and container assembly, according to claim 4, wherein the connecting element (10) is configured to interfere with a housing on the underside of a base of the dead livestock container (1).

6. Refrigeration chamber and container assembly, according to claim 5, wherein the connecting element (10) comprises a protruding part, tapered towards a distal end thereof, configured to interfere with a housing of matching shape in the base of the dead livestock container (1).

7. Refrigeration chamber and container assembly, according to claim 6, wherein the connecting element (10) is a rectangular prism having two inclined surfaces on an upper face thereof extending from it.

8. Refrigeration chamber and container assembly, according to any of the claims 2 or 3 comprising a container carrying platform with wheels wherein the container translation unit comprises at least one hydraulic cylinder (8) or linear actuator having an end of a first piston rod (8a) thereof connected to the platform movable along the guide elements and supporting the dead livestock container (1) so that the hydraulic cylinder (8) is able to move the container carrying platform from the loading site to the refrigeration chamber and vice versa; an end of a second piston rod (8b) of the hydraulic cylinder is fixed to an inner basal surface (4a) of the refrigeration chamber (4).

9. Refrigeration chamber and container assembly, according to any one of claims 4 to 7, wherein the door (11) further comprises on an inner side thereof additional guides (12) for guiding the movement of the connecting element (10).

10. Refrigeration chamber and container assembly, according to any one of the preceding claims, wherein the door (11) is arranged at a front side of the refrigeration chamber (4).

11. Refrigeration chamber and container assembly, according to any one of the preceding claims, further comprising a signal receiver (13) operatively connected to a control unit (14) of the refrigeration chamber (4) configured to control, at least, the door actuation unit (3) and the container translation unit.

12. Refrigeration chamber and container assembly, according to claim 10, wherein the signal receiver (13) is an infrared signal receiver.

13. Refrigeration chamber and container assembly, according to any one of the preceding claims, wherein the refrigeration chamber (4) further comprises at an underside of a base thereof two coupling elements (15) for receiving corresponding fingers of a forklift truck or crane truck, the two coupling elements (15) being arranged transversally to the refrigeration chamber (4).

14. Refrigeration chamber, container and loader assembly comprising:
- a refrigeration chamber and container assembly according to any one of claims 1 to 13;
- a loader (16) for loading dead livestock into the container (1);
wherein the loader is arranged adjacent to the loading site and comprises a receptacle (17) movable between a loading position and an unloading position, and vice versa, by at least one hydraulic cylinder (18) or linear actuator.

15. Refrigeration chamber, container, and loader assembly, according to claim 14, wherein the loader (16) is mounted on a support structure (20), and the receptacle (17) is rotatably movable around a rotation axis (18) arranged in operation adjacent to the container (1) and above an upper edge thereof.
